# EUROPÄISCHE PATENTSCHRIFT

(11) **EP 3 322 626 B1**
(45) Veröffentlichungstag und Bekanntmachung des Hinweises auf die Patenterteilung: **24.04.2019**
(21) Anmeldenummer: 16730374.2
(22) Anmeldetag: 17.06.2016
(51) Int. Cl.: B60W 50/08, B60W 30/14, B60W 50/00, B60W 50/14

(54) **LÄNGSFÜHRENDES FAHRERASSISTENZSYSTEM IN EINEM KRAFTFAHRZEUG**
LONGITUDINAL DRIVER ASSISTANCE SYSTEM IN A MOTOR VEHICLE
SYSTÈME D'AIDE À LA CONDUITE À GUIDAGE LONGITUDINAL DANS UN VÉHICULE AUTOMOBILE

(30) Priorität: 14.07.2015 DE 102015213183
(43) Veröffentlichungstag der Anmeldung: 23.05.2018
(73) Patentinhaber: Bayerische Motoren Werke Aktiengesellschaft, 80809 München (DE)
(72) Erfinder: KNOLLER, Stefan, 80997 München (DE)
(86) Internationale Anmeldenummer: PCT/EP2016/064035
(87) Internationale Veröffentlichungsnummer: WO 2017/008999

(56) Entgegenhaltungen:
- EP-A1- 2 020 331
- DE-A1-102007 005 245
- DE-A1-102012 211 967
- DE-A1-102013 205 609
- DE-A1-102014 017 522

## Beschreibung

Die Erfindung bezieht sich auf ein längsführendes Fahrerassistenzsystem in einem Kraftfahrzeug.

Grundsätzlich sind bereits viele als Geschwindigkeitsregelsysteme ausgestaltete längsführende Fahrerassistenzsysteme bekannt, welche die Geschwindigkeit des Kraftfahrzeugs auf eine vorgegebene Soll- bzw. maximal zulässige Höchstgeschwindigkeit regeln. Neben diesen Längsregelsystemen können heute bei einigen Herstellern auch um eine Abstandsregelung erweiterte Längsregelsysteme, sog. abstandsbezogene Längsregelsysteme bzw. Geschwindigkeitsregelsysteme erworben werden. Derartige - bspw. bei der Anmelderin der vorliegenden Patentanmeldung unter der Bezeichnung "Active Cruise Control" - angebotene Systeme ermöglichen es, das Kraftfahrzeug unter Einhaltung eines gewünschten Abstands zu einem vorausfahrendem Fahrzeug mit einer gewünschten oder einer entsprechend geringeren Geschwindigkeit automatisch zu führen. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit - bspw. durch Veranlassen eines geeigneten Bremsmoments - an die Geschwindigkeit des vorausfahrenden Kraftfahrzeugs bzw. des Zielobjekts derart angepasst, dass eine in der "aktiven Fahrgeschwindigkeitsreglung" bzw. im entsprechenden Längsregelsystem enthaltene Abstandsregelung automatisch einen situationsgerechten Abstand zum vorausfahrenden Kraftfahrzeug bzw. Zielobjekt einregelt und einhält.

Weiter sind als sog. Geschwindigkeitsbegrenzungssysteme ausgestaltete längsführende Fahrerassistenzsysteme bekannt, welche ein Überschreiten der vom Fahrer eingestellten maximal zulässigen Geschwindigkeit verhindern.

Die DE 10 2012 211 967 A1 beschreibt eine Kombination aus einem Geschwindigkeitsbegrenzungssystem und einem Geschwindigkeitsregelsystem, wobei die maximal zulässige Höchstgeschwindigkeit des Geschwindigkeitsbegrenzungssystems anstelle der einstellten Setzgeschwindigkeit als (neue) Soll- bzw. Zielgeschwindigkeit für die Geschwindigkeitsregelung übernehmbar ist.

Schließlich gibt es in neueren Fahrzeugen auch Fahrerassistenzsysteme, welche entweder aus Kartendaten eines Navigationssystems und/oder mittels Bildverarbeitung vorausschauend eine Geschwindigkeitsbegrenzung erkennen und dem Fahrer ab Erreichen der Geschwindigkeitsbegrenzung diese dauerhaft anzeigen können, so dass der Fahrer selbständig bei Bedarf seine Geschwindigkeit an die Geschwindigkeitsbegrenzung anpassen kann (z. B. BMW Speed Limit Info).

Aus der DE 10 2008 018 421 A1 ist ein Fahrerassistenzsystem zum Senden und Empfangen von Geschwindigkeitsdaten und/oder Verkehrsdichtedaten zur Steuerung einer Geschwindigkeitsregelanlage bekannt, welches anhand der empfangenen Daten eine maximal zulässige Höchstgeschwindigkeit ermittelt und diese dem Fahrer durch Ausgabe eines entsprechenden Hinweises mitteilt. Der Fahrer kann diese Vorgabe der zulässigen Geschwindigkeit durch eine einfache Betätigung für seine Geschwindigkeitsregelanlage übernehmen.

Ein ähnliches Fahrerassistenzsystem wird in DE 10 2007 005245 A1 offenbart.

Aus der noch unveröffentlichten DE 102014215673 A1 ist ebenfalls ein längsführendes Fahrerassistenzsystem bekannt, das bei Erkennen eines vorausliegenden Ereignisses, das eine Geschwindigkeitsreduzierung erfordert, eine Verzögerungsstrategie ermittelt und zu einem definierten Zeitpunkt vor Erreichen des Ereignisses einen Aufforderungshinweis an den Fahrer zum Zulassen der automatischen Umsetzung der Verzögerungsstrategie ausgibt. Bestätigt der Fahrer den Aufforderungshinweis, wird eine automatische Umsetzung der Verzögerungsstrategie veranlasst. Die Erkennungseinheit kann ein relevantes Ereignis dabei entweder aufgrund von Kartendaten (bspw. eines Navigationsgeräts) oder aufgrund von Kameradaten ermitteln bzw. erkennen.

Aufgabe der Erfindung ist nun, ein verbessertes längsführendes Fahrerassistenzsystem mit einer für den Fahrer nachvollziehbaren Angebotsanzeige zur automatischen Übernahme einer neuen Setzgeschwindigkeit bereitzustellen.

Diese Aufgabe wird durch ein Fahrerassistenzsystem nach Patentanspruch 1 gelöst. Vorteilhafte Weiterbildungen ergeben sich aus den abhängigen Ansprüchen.

Das erfindungsgemäße längsführende Fahrerassistenzsystem für ein Kraftfahrzeug umfasst im Wesentlichen ein Erfassungssystem zum Erkennen vorausliegender relevanter Ereignisse, die eine Änderung der maximal zulässigen Höchstgeschwindigkeit erfordern, und eine Funktionseinheit, die bei Erkennen eines relevanten vorlausliegenden Ereignisses unter Berücksichtigung des Orts des relevanten Ereignisses (und ggf. weiterer notwendiger Informationen, wie z. B. einer ermittelten maximal zulässigen Geschwindigkeit am Ort des relevanten Ereignisses, der Differenzgeschwindigkeit zwischen Fahrzeug und ermittelter neuer maximal zulässiger Geschwindigkeit, erkannte Freifahrt oder Folgefahrt, aktuelle oder zugelassene Verzögerungsbetriebsarten des Fahrzeugs wie z. B. Segelbetrieb, Schubbetrieb, Bremsbetrieb) einen ortsabhängigen Zeitpunkt ermittelt, bei dessen Erreichen die Funktionseinheit eine Ausgabe eines Aufforderungshinweises zum Zulassen einer automatischen Anpassung der aktuell maximal zulässigen Höchstgeschwindigkeit auf eine neue maximal zulässige Höchstgeschwindigkeit veranlasst. Wird eine vorausliegendes Ereignis rechtzeitig erkannt, so wird idealerweise eine Verzögerungsstrategie des Fahrzeugs zum Erreichen der ermittelten neuen maximal zulässigen Höchstgeschwindigkeit (zumindest nahezu) am Ort des relevanten Ereignisses ermittelt. Anhand der ermittelten Verzögerungsstrategie ergibt sich dann in der Regel der zu ermittelnde ortsabhängige Zeitpunkt, zu dem die Ausgabe eines Aufforderungshinweises zum Zulassen einer automatischen Anpassung der aktuell maximal zulässigen Höchstgeschwindigkeit auf eine neue maximal zulässige Höchstgeschwindigkeit veranlasst wird.

Wird bei Ausgabe eines Aufforderungshinweises eine - bspw. durch Betätigung eines Bedienelements- (manuell) ausgelöste Zulassungsbestätigung erkannt, wird bei Anpassen der maximal zulässigen Höchstgeschwindigkeit (zumindest bei Freifahrt) eine Ansteuerung der Antriebs- und/oder Bremsaktorik unter Berücksichtigung der neuen maximal zulässigen Höchstgeschwindigkeit durch Ausgabe eines entsprechenden Beschleunigungssollwertes veranlasst, so dass die Fahrzeuggeschwindigkeit zumindest bei Freifahrt und höherer manuell vorgegebener maximal zulässiger Sollgeschwindigkeit auf den neue maximal zulässige Höchstgeschwindigkeit geregelt wird.

Bei den vorausliegenden Ereignissen kann es sich bspw. um temporäre oder dauerhafte Geschwindigkeitsbegrenzungen handeln, welche entweder direkt auf einem Verkehrszeichen angegeben sind, oder aufgrund der allgemeinen Verkehrsregeln daraus abzuleiten sind (z. B. gilt in Deutschland bei einer Orts-Durchfahrt eine Geschwindigkeitsbegrenzung auf 50 km/h). Ebenso kann es sich auch um ein eine Geschwindigkeitsbegrenzung auflösendes, oder zumindest ein auf eine neue Höchstgeschwindigkeit erhöhendes Ereignis handeln, wie es z. B. bei Verlassen einer Ortschaft üblicherweise der Fall ist.

Die für das längsführende Fahrerassistenzsystem maßgebliche (neue) maximal zulässige Höchstgeschwindigkeit am Ort des vorausliegenden Ereignisses kann entweder die tatsächlich vorgegebene neue Geschwindigkeitsbegrenzung oder eine von der vorgegebenen neuen Geschwindigkeitsbegrenzung um einen vorgegebenen Betrag nach oben oder unten abweichende Geschwindigkeit sein, wobei der Betrag und die Richtung der Abweichung bspw. auch durch den Fahrer in einem zentralen Fahrzeugmenü einstellbar sein kann. Diese neue Höchstgeschwindigkeit kann der Funktionseinheit direkt übermittelt, oder erst aufgrund der vorliegenden Informationen in der Funktionseinheit ermittelt werden.

Alternativ oder zusätzlich ist es auch möglich, dass der Fahrer auf einer ihm bekannten Strecke über ein fahrzeuginternes oder fahrzeugexternes Interface selbst Geschwindigkeitslimits ortsbasiert festlegt. Bei Befahren der Strecke mit aktivem Längsführungssystem können diese Geschwindigkeitslimits entsprechend als neue Höchstgeschwindigkeiten berücksichtig werden. Dabei kann der Fahrer im Vorfeld z. B. auch noch auswählen, ob er grundsätzlich alle selbst festgelegten Geschwindigkeitslimit berücksichtigt haben will, oder nur entsprechend einer Regel ausgewählte Geschwindigkeitslimits (z. B. nur auf einer bestimmten Strecke, für bestimmte Streckenklassen, zu einer bestimmten Uhrzeit, abhängig von Wetterbedingungen, etc.). Für einen bestimmten Streckenabschnitt können auch mehrere Geschwindigkeitsprofile angelegt werden, die dann entsprechend vordefinierten Regeln aktiv sind (Geschwindigkeitsprofil für gute Streckenbedingungen, Geschwindigkeitsprofil für nasse Strecken und/oder Geschwindigkeitsprofil für schneebedeckte Strecken).

Weiter kann die Funktionseinheit eingerichtet sein, bei erkannter Zulassungsbestätigung eine Rücknahme der Ausgabe des Aufforderungshinweises zu veranlassen. Wird eine (manuell) ausgelöste Ablehnung des Aufforderungshinweises erkannt, wird die Ausgabe des Aufforderungshinweises ebenfalls zurückgenommen.

Der Erfindung liegt folgende Erkenntnis zugrunden: Bewegt sich das mit dem längsführenden Fahrerassistenzsystem ausgestattete Fahrzeug - bspw. aufgrund einer aktuelle Folgefahrt mit einer geringen Differenzgeschwindigkeit zur am vorausliegenden Ort neuen maximal zulässigen Höchstgeschwindigkeit, kann die berechnete Zeitspanne, ab der bspw. eine Verzögerung veranlasst werden müsste, um die neue maximal zulässige Höchstgeschwindigkeit am relevanten Ort erreichen zu können, sehr kurz oder Null sein. Würde aufgrund dieser berechneten Zeitspanne der Aufforderungshinweis somit erst kurz vor oder sogar erst nach Passieren des relevanten Orts ausgegeben werden, wäre dies für den Fahrer nicht immer nachvollziehbar.

Um ein derart unplausibles Verhalten des längsführenden Fahrerassistenzsystems zu verhindern, ist erfindungsgemäß vorgesehen, dass die Funktionseinheit eingerichtet ist, bei der Ermittlung des ortsabhängigen Zeitpunkts eine vorgegebene Mindestangebotsdauer für die Ausgabe des Aufforderungshinweises, insbesondere eine vorgegebene Mindestangebotsdauer bis zum Erreichen des relevanten Ereignisses zu berücksichtigen. Idealerweise ist die Funktionseinheit dabei eingerichtet, einen derartigen ortsabhängigen Zeitpunkt zu ermitteln, dass der Aufforderungshinweis mindestens für die vorgegebene Mindestangebotsdauer anzeigbar ist bzw. bei fehlender Annahme oder Ablehnung für die vorgegebene Mindestangebotsdauer bis zu Erreichen des relevanten Ereignisses angezeigt wird.

Die vorgegebene Mindestangebotsdauer kann dabei eine fest vorgegebene Zeitdauer von z. B. 1 - 4 Sekunden, insbesondere von 2 - 3 Sekunden sein. Alternativ ist auch denkbar, anstelle einer fest definierten Zeitdauer die Mindestangebotsdauer in Abhängigkeit vorgegebener Parameter, wie z. B. der aktuell befahrenden und/oder vorausliegenden Straßenklasse, der aktuell gefahrenen Geschwindigkeit und/oder der neuen maximal zulässigen Höchstgeschwindigkeit (variabel) vorzugeben. Unter dem Begriff Mindestangebotsdauer kann entweder eine Zeitdauer, also eine Mindestzeitdauer bis zu Erreichen des relevanten Orts, oder eine Streckendauer, also eine Mindestdistanz bis zum Ort des relevanten Ereignisses, oder eine Kombination aus Zeitdauer und Streckendauer verstanden werden.

Neben der zu berücksichtigenden vorgegebenen Mindestangebotsdauer ist in einer vorteilhaften Weiterbildung der Erfindung zusätzlich auf Basis einer ermittelten bzw. aktuell erlaubten Verzögerungsstrategie eine (maximal) mögliche Angebotsdauer bis zum Erreichen des relevanten Ereignisses ermittelbar, welche dann ebenfalls bei der Ermittlung des ortsabhängigen Zeitpunkt, insbesondere durch einen Vergleich dieser auf Basis der Verzögerungsstrategie ermittelten möglichen Angebotsdauer mit der vorgegebenen Mindestangebotsdauer, zu berücksichtigen ist. Wie bereits oben erwähnt wurde, kann die Verzögerungsstrategie derart ermittelt werden bzw. eine derartige Verzögerungsstrategie angewendet werden, dass bei Umsetzung der Verzögerungsstrategie in der Regel am Ort des relevanten Ereignisses die ermittelte maximal zulässige Höchstgeschwindigkeit erreichbar ist bzw. erreicht wird. Da zunächst die Verzögerungsstrategie ermittelt werden muss, bevor der genaue Zeitpunkt der Zulassung (und somit der Umsetzung) der Verzögerungsstrategie bekannt ist, muss die Verzögerungsstrategie kontinuierlich an die aktuell geltende Situation - auch noch nach dem Starten der Umsetzung der Verzögerungsstrategie - angepasst werden, wobei die nachträgliche Anpassung ab dem Zeitpunkt der Ausgabe des Aufforderungshinweises auf die Ausgabe des Hinweises keinen Einfluss mehr hat.

Ergibt ein Vergleich einer auf Basis einer ermittelten Verzögerungsstrategie ermittelten möglichen Angebotsdauer bis zum Erreichen des relevanten Ereignisses mit der vorgegebenen Mindestangebotsdauer, dass die ermittelte maximal mögliche Angebotsdauer größer als die vorgegebene Mindestangebotsdauer ist, ist die Funktionseinheit vorteilhafterweise eingerichtet, den ortsabhängigen Zeitpunkt, zu dem der Aufforderungshinweise ausgegeben werden soll, aus der ermittelten maximal möglichen Angebotsdauer zu ermitteln, d. h. in diesem Fall wird die auf Basis der Verzögerungsstrategie ermittelte Zeitspanne, aber der die Verzögerungsstrategie (erstmalig) umgesetzt werden sollte (um idealerweise am Ort des relevanten Ereignisses die neue maximal zulässige Höchstgeschwindigkeit erreichen können), als Ausgabezeitpunkt für den Aufforderungshinweis verwendet.

Ergibt ein Vergleich einer auf Basis einer ermittelten Verzögerungsstrategie ermittelten möglichen Angebotsdauer bis zum Erreichen des relevanten Ereignisses mit der vorgegebenen Mindestangebotsdauer jedoch, dass die ermittelte maximal mögliche Angebotsdauer nicht größer als die vorgegebene Mindestangebotsdauer ist, ist die Funktionseinheit vorteilhafterweise eingerichtet, den ortsabhängigen Zeitpunkt, zu dem der Aufforderungshinweise ausgegeben werden soll, aus der vorgegebenen Mindestangebotsdauer (von z. B. 2 - 3 Sekunden vor Erreichen des relevanten Orts) zu ermitteln, d. h. in diesem Fall wird der Aufforderungshinweis bereits ausgegeben, bevor die ermittelte Verzögerungsstrategie umgesetzt werden kann bzw. sollte.

Tritt nun der Fall ein, dass nach Ausgabe des Aufforderungshinweises der Fahrer durch eine entsprechende Bedienhandlung die automatische Umsetzung sofort zulässt, also noch vor Erreichen des auf Basis der Verzögerungsstrategie ermittelten Start-Zeitpunkts, dann ist die Funktionseinheit eingerichtet, die Anzeige des Aufforderungshinweises gleich zurückzunehmen und das Fahrzeug mit einer geringen Verzögerung zu verzögern, auch wenn der Ort, zu dem die ermittelte Verzögerungsstrategie eigentlich erst gestartet werden sollte, noch nicht erreicht ist.

Um neben einer zu kurzen bspw. sehr späten Anzeigeaufforderung auch eine zu frühe Anzeige eines Aufforderungshinweises zu unterbinden, ist in analoger Herangehensweise an dieses Problem die Funktionseinheit des längsführenden Fahrerassistenzsystems derart ausgestaltet, bei der Ermittlung des ortsabhängigen Zeitpunkts eine vorgegebene Maximalangebotsdauer oder eine vorgegebene Maximaldistanz bis zum Ort des relevanten Ereignisses für die Ausgabe des Aufforderungshinweises zu berücksichtigen.

Die vorgegebene Maximaldauer oder Maximaldistanz kann dabei ein fest vorgegebener Wert von z. B. ca. 1000m oder ca. 600m, insbesondere von ca. 800m sein. Alternativ ist auch denkbar, anstelle einer fest definierten Maximaldauer oder Maximaldistanz die Maximaldauer oder Maximaldistanz in Abhängigkeit vorgegebener Parameter, wie z. B. der aktuell befahrenden und/oder vorausliegenden Straßenklasse, der aktuell gefahrenen Geschwindigkeit und/oder der neuen maximal zulässigen Höchstgeschwindigkeit (variabel) vorzugeben.

In einer vorteilhaften Ausgestaltung der Erfindung kann demnach die Funktionseinheit eingerichtet sein, einen derartigen ortsabhängigen Zeitpunkt zu ermitteln, dass der Aufforderungshinweis maximal für eine vorgegebene Maximalangebotsdauer anzeigbar ist oder frühestens bei Erreichen einer vorgegebenen Maximaldistanz zum Ort des relevanten Ereignisses ausgegeben wird.

Neben der zu berücksichtigenden vorgegebenen Maximalangebotsdauer oder Maximaldistanz ist in einer vorteilhaften Weiterbildung der Erfindung auch hier eine auf Basis einer ermittelten bzw. aktuell erlaubten Verzögerungsstrategie (maximal) mögliche Angebotsdauer (bzw. eine daraus abgeleitete erlaubte Aktivierungsdistanz) bis zum Erreichen des relevanten Ereignisses, insbesondere durch einen Vergleich dieser auf Basis der Verzögerungsstrategie ermittelten möglichen Angebotsdauer mit der vorgegebenen Maximaldauer (oder einer aus der Verzögerungsstrategie abgeleitete Aktivierungsdistanz mit der vorgegebenen Maximaldistanz), zu berücksichtigen ist.

Ergibt ein Vergleich einer auf Basis einer ermittelten Verzögerungsstrategie ermittelten möglichen Angebotsdauer (bzw. der daraus abgeleitete erlaubte Aktivierungsdistanz) bis zum Erreichen des relevanten Ereignisses mit der vorgegebenen Maximaldauer (bzw. der Maximaldistanz), dass die ermittelte maximal mögliche Angebotsdauer (bzw. die daraus abgeleitete erlaubte Aktivierungsdistanz) zeitlich gesehen früher eintritt bzw. erreicht wird, als die vorgegebene Maximaldauer oder Maximaldistanz, ist die Funktionseinheit vorteilhafterweise eingerichtet, den ortsabhängigen Zeitpunkt, zu dem der Aufforderungshinweise ausgegeben werden soll, aus der vorgeben Maximaldauer zu ermitteln oder den Aufforderungshinweis erst bei Erreichen der Maximaldistanz auszugeben.

Ergibt ein Vergleich einer auf Basis einer ermittelten Verzögerungsstrategie ermittelten möglichen Angebotsdauer (bzw. der daraus abgeleitete erlaubte Aktivierungsdistanz) bis zum Erreichen des relevanten Ereignisses mit der vorgegebenen Maximaldauer (bzw. der Maximaldistanz) jedoch, dass die ermittelte maximal mögliche Angebotsdauer (bzw. die daraus abgeleitete erlaubte Aktivierungsdistanz) zeitlich gesehen nicht früher eintritt bzw. erreicht wird, als die vorgegebene Maximaldauer oder Maximaldistanz, ist die Funktionseinheit vorteilhafterweise eingerichtet, den ortsabhängigen Zeitpunkt, zu dem der Aufforderungshinweise ausgegeben werden soll, aus der ermittelten möglichen Angebotsdauer zu ermitteln, d. h. in diesem Fall wird die auf Basis der Verzögerungsstrategie ermittelte Zeitspanne, aber der die Verzögerungsstrategie (erstmalig) umgesetzt werden sollte (um idealerweise am Ort des relevanten Ereignisses die neue maximal zulässige Höchstgeschwindigkeit erreichen können), als Ausgabezeitpunkt für den Aufforderungshinweis verwendet.

Der Vollständigkeit halber ist hier zu erwähnen, dass der erfinderische Aspekt der Berücksichtigung einer vorgegebenen maximal zulässigen Maximaldistanz oder Maximaldauer unabhängig von obigen Ausführungen zur Berücksichtigung einer vorgegebenen Mindestangebotsdauer als eigenständiger Gedanke zu verstehen ist. Die Anmelderin behält sich hierzu vor, diesen erfinderischen Gedanken in einer eigenen Patentanmeldung weiterzuverfolgen.

Die Erfindung wird nun anhand nachfolgenden Ausführungsbeispiels näher erläutert. Dabei zeigt
Fig. 1 einen beispielhaften Aufbau eines als Geschwindigkeitsregelsystem in einem Kraftfahrzeug ausgebildeten längsführenden Fahrerassistenzsystem zur Regelung der Geschwindigkeit auf eine Soll-Geschwindigkeit, und
Fig. 2 eine Verkehrssituation zur Darstellung des für die Aktivierung eines Aufforderungshinweises zum Zulassen einer Anpassung der maximal erlaubten Höchstgeschwindigkeit zugelassenen Bereichs.

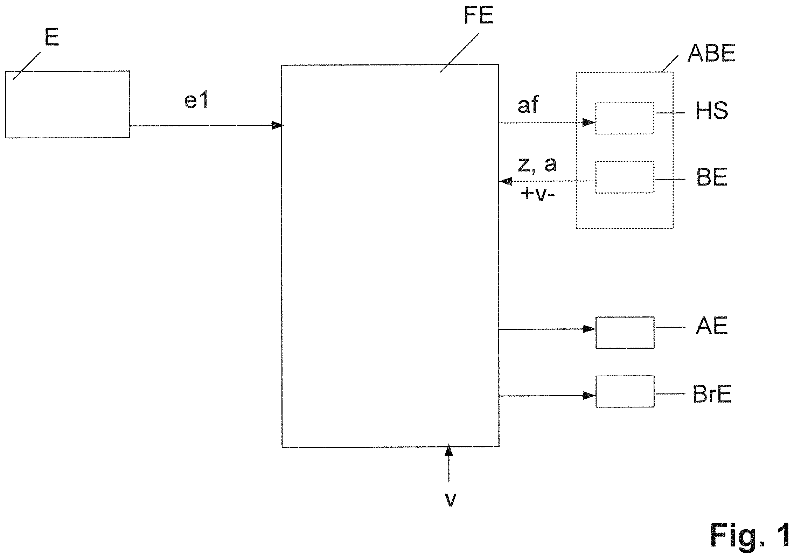

Die Fig. 1 zeigt im Detail als zentrales Element eines längsführenden Fahrerassistenzsystems eine Funktionseinheit FE, welche Eingangssignale e1 eines Erfassungssystems E, ein Geschwindigkeitssignal v, ein Zulassungssignal z zum Zulassen einer automatischen Anpassung der maximal zulässigen Höchstgeschwindigkeit, ein Ablehnungssignal a zum Ablehnen der Zulassung der automatischen Anpassung der maximal zulässigen Höchstgeschwindigkeit, und ein Signal +v- zum manuellen Anpassen der maximal zulässigen Höchstgeschwindigkeit erhält.

Bei der Erfassungseinheit E handelt es sich um eine kartenbasierte Erfassungseinheit E, welche anhand von vorliegenden Kartendaten, der eigenen Position und einem bekannten vorausliegenden Streckenabschnitt Ereignisse erkennt, die eine Anpassung der maximal zulässigen Höchstgeschwindigkeit erfordern (z. B. Geschwindigkeitsbegrenzung) bzw. erlauben (z. B. Aufhebung einer Geschwindigkeitsbegrenzung). Die kartenbasierte Erfassungseinheit E ist derart ausgestaltet, dass sie zum einen den Ort des vorausliegenden relevanten Ereignisses, also auch die Höhe der ab diesem Ort geltenden maximal erlaubte Grenzgeschwindigkeit erkennt und an die Funktionseinheit FE durch das Signal e1 übermittelt.

Weiter kann die kartenbasierte Erfassungseinheit E anhand der vorliegenden Kartendaten - und ggf. unter Berücksichtigung einer geplanten Fahrroute vorliegende Informationen über den Streckenverlauf wie z. B. Kreisverkehre, enge Kurven und/oder Abzweigungen erkennen und die Information an die Funktionseinheit übertragen. Aus dieser Information über den Streckenverlauf können ebenfalls relevante Ereignisse, die eine Anpassung der maximal zulässigen Höchstgeschwindigkeit erfordern, abgeleitet werden.

Zusätzlich, aber hier nicht dargestellt, kann die Funktionseinheit FE mit einer kamerabasierten Erfassungseinheit verbunden sein, welche anhand der Daten einer nach vorne ausgerichtete (z.B. Video-) Sensorik ebenfalls vorausliegende, geschwindigkeitsbegrenzende Ereignisse erkennt, die möglicherweise eine Anpassung der maximal zulässigen Höchstgeschwindigkeit auf eine neue Höchstgeschwindigkeit erfordern. Im Unterschied zur kartenbasierten Erfassungseinheit E kann die kamerabasierte Erfassungseinheit die relevanten Orte aufgrund der Sensorik nur vorausschauend und erst relativ kurzfristig, oder - aufgrund der notwendigen Signalverarbeitung - auch erst nach Passieren des relevanten Ereignisses erkennen.

Sobald der Funktionseinheit FE relevante Daten e1 über den Ort eines vorausliegenden relevanten Ereignisses und die Höhe der ab diesem Ort maximal erlaubte Grenzgeschwindigkeit vorliegen, kann die Funktionseinheit FE zunächst - unter Berücksichtigung einer Fahrervorgabe - die maximal zulässige Höchstgeschwindigkeit am Ort des vorausliegenden Ereignisses ermitteln. Alternativ kann die übertragene maximal erlaubte Grenzgeschwindigkeit auch direkt als maximal zulässige Höchstgeschwindigkeit verwendet werden.

Anhand vorhandener weiterer relevanter Daten, wie z. B. der Relativgeschwindigkeit zwischen Fahrzeug und ermittelter neuen maximal zulässigen Höchstgeschwindigkeit, dem Abstand zum relevanten Ort, der aktuell geltenden maximal zulässigen Höchstgeschwindigkeit, einer Information darüber, ob sich das Fahrzeug in einem Freifahrtmodus mit aktuell geltender maximal zulässiger Höchstgeschwindigkeit oder einem Folgefahrtmodus mit geringer als der aktuell geltenden maximal zulässigen Höchstgeschwindigkeit befindet, der vorliegenden relevanten Informationen über den Streckenverlauf, insbesondere einer ermittelten maximal empfohlenen Höchstgeschwindigkeit, einer ermittelten Verzögerungsstrategie, einer vorgegebenen Mindestangebotsdauer und/oder einer vorgegebenen Maximaldistanz veranlasst die Funktionseinheit FE zu einem definierten Zeitpunkt durch ein entsprechendes Signal af an eine Anzeigebedieneinheit ABE, welche ein Hinweissystem HS und ein Bedienelement BE umfasst, die Ausgabe eines Aufforderungssignals. Je nach Ausgestaltung des Geschwindigkeitsregelsystems kann gemäß einer ersten Alternative die Ausgabe grundsätzlich nur dann veranlasst werden, wenn die ermittelte neue maximal zulässige Höchstgeschwindigkeit kleiner als die vom Fahrer vorgegebene maximal gewünschte Soll-Geschwindigkeit ist. Gemäß einer zweiten Alternative kann die Ausgabe unabhängig von der vom Fahrer maximal gewünschten Soll-Geschwindigkeit erfolgen.

Das Bedienelement BE, durch das der Fahrer den Aufforderungshinweis bestätigen kann, ist derart ausgestaltet, dass der Fahrer zu denjenigen Zeiten, zu denen kein Aufforderungshinweis ausgegeben wird, eine manuelle Anpassung der maximal gewünschten Sollgeschwindigkeit +v- anfordern kann. Weiter ist das Bedienelement BE derart ausgestaltet, dass der Fahrer bei Ausgabe des Aufforderungshinweises durch eine erste Betätigungsart die angeforderte Zulassung der automatischen Anpassung der zulässigen Höchstgeschwindigkeit bestätigen (Signal z), oder durch eine zweite Betätigungsart die angeforderte Zulassung der automatischen Anpassung der maximal zulässigen Höchstgeschwindigkeit ablehnen (Signal a) kann.

Nur wenn der Fahrer bei Ausgabe des Aufforderungshinweises durch Betätigung des Bedienelements BE gemäß der ersten Betätigungsart das Aufforderungssignal bestätigt, sendet die Anzeigebedieneinheit ABE ein entsprechendes "Zulassungs"-Signal z an die Funktionseinheit FE zurück. Daraufhin beginnt die Funktionseinheit FE mit dem Einleiten der automatischen Anpassung der maximal zulässigen Höchstgeschwindigkeit und - entsprechend der neuen Höchstgeschwindigkeit - (wenn möglich) mit einer Anpassung der Geschwindigkeitsregelung unter Berücksichtigung der neuen maximal zulässigen Höchstgeschwindigkeit durch Veranlassen einer entsprechenden Ansteuerung der Antriebseinheit AE und/oder Bremseinheit BrE. Befindet sich das Fahrzeug bspw. im sog. Freifahrtmodus, erfolgt eine Regelung der Geschwindigkeit zum Erreichen der neuen Höchstgeschwindigkeit am Ort des maßgeblichen Ereignisses. Befindet sich das Fahrzeug im sog. Folgemodus auf ein vorausfahrendes Zielobjekt, so wird die Folgefahrtregelung unter Berücksichtigung der neuen maximal zulässigen Höchstgeschwindigkeit (zunächst) fortgeführt. Gleichzeitig wird bei Erkennen der manuell ausgelösten Zulassungsbestätigung z die Rücknahme der Ausgabe des Aufforderungshinweises veranlasst.

Lehnt der Fahrer bei Ausgabe des Aufforderungshinweises durch Betätigung des Bedienelements BE gemäß der zweiten Betätigungsart die Zulassung der automatischen Anpassung der maximal zulässigen Höchstgeschwindigkeit ab, sendet die Anzeigebedieneinheit ein Signal a an die Funktionseinheit FE zurück. Daraufhin verwirft die Funktionseinheit die neu ermittelte maximal zulässige Höchstgeschwindigkeit und führt die aktuelle Geschwindigkeitsregelung fort. Gleichzeitig wird bei Erkennen der manuell ausgelösten Ablehnung die Rücknahme der Ausgabe des Aufforderungshinweises veranlasst.

Im Hinblick auf die Erfindung ist die Funktionseinheit FE nun eingerichtet, die Ermittlung des definierten Zeitpunkts, zu dem der Aufforderungshinweis ausgegeben werden soll, unter Berücksichtigung einer vorgegebenen Mindestangebotsdauer und einer vorgegebenen Maximaldistanz vorzunehmen. In einer konkreten Ausgestaltung könnte dies wie folgt erfolgen:
Werden Daten e1 über ein relevanten Ereignis, das eine Anpassung der maximal zulässigen Höchstgeschwindigkeit erfordert, an die Funktionseinheit FE übertragen, ermittelt die Funktionseinheit FE zunächst die neue maximal zulässige Höchstgeschwindigkeit und auf Basis einer ermittelten, zugelassenen Verzögerungsstrategie einen vorläufigen ortsabhängigen Zeitpunkt, zu dem ein Aufforderungshinweis für die Zulassung der automatischen Anpassung der maximal zulässigen Höchstgeschwindigkeit ausgebbar ist, und basierend auf diesen vorläufigen ortsabhängigen Zeitpunkt eine maximal mögliche Angebotsdauer für den Aufforderungshinweis. Diese maximal mögliche Angebotsdauer wird dann mit einer vorgegebenen Mindestangebotsdauer verglichen. Ist die maximal mögliche Angebotsdauer größer als die vorgegebene Mindestangebotsdauer, wird der ermittelte vorläufige ortsabhängige Zeitpunkt als für die Veranlassung der Ausgabe des Aufforderungshinweis geltende ortsabhängige Zeitpunkt festgelegt und bei Erreichen dieses ortsabhängigen Zeitpunkts die Ausgabe des Aufforderungshinweises veranlasst. Ist die maximal mögliche Angebotsdauer jedoch nicht größer bzw. kleiner als die vorgegebene Mindestangebotsdauer, wird der ermittelte vorläufige ortsabhängige Zeitpunkt aus der vorgegebenen Mindestangebotsdauer ermittelt, und bei Erreichen dieses ortsabhängigen Zeitpunkts die Ausgabe des Aufforderungshinweises veranlasst, so dass der Aufforderungshinweis zumindest für die vorgegebene Mindestangebotsdauer bis zum Erreichen des relevanten Ereignisses anzeigbar ist.

Zusätzlich wird basierend auf dem ermittelten vorläufigen ortsabhängigen Zeitpunkt die Distanz zwischen dem ortsabhängigen Zeitpunkt und dem relevanten Ereignis ermittelt und mit einer vorgegebenen maximal zulässigen Maximaldistanz zum Ort des relevanten Ereignisses verglichen. Liegt der ortsabhängige Zeitpunkt örtlich gesehen vor dem Anfang der maximal erlaubten Maximaldistanz, wird der tatsächlich geltende ortsabhängige Zeitpunkt, zu dem der Aufforderungshinweis veranlasst wird, aus der vorgegebenen maximal zulässigen Maximaldistanz ermittelt, so dass der Aufforderungshinweis frühestens mit Erreichen der maximal zulässigen Maximaldistanz ausgegeben wird. Liegt der ortsabhängige Zeitpunkt örtlich gesehen hinter dem Anfang der maximal erlaubten Maximaldistanz, wird als tatsächlich geltender ortsabhängiger Zeitpunkt der vorläufig ermittelten ortsabhängige Zeitpunkt verwendet.

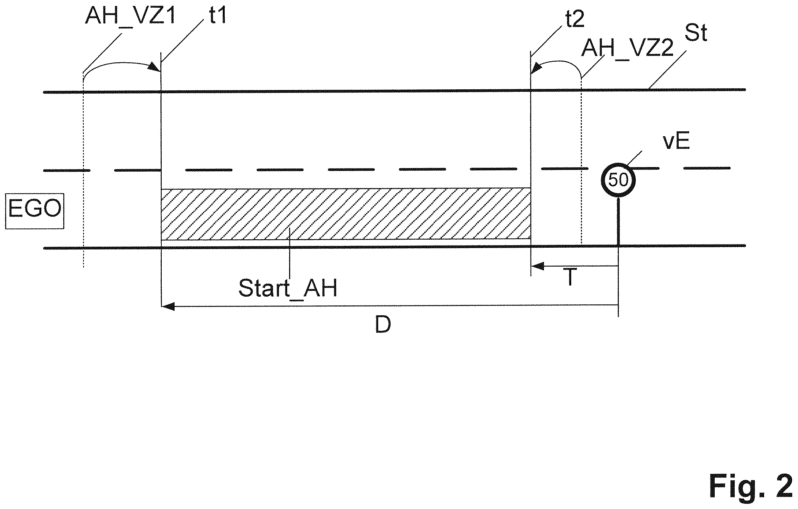

Die Fig. 2 zeigt eine Verkehrssituation zur Darstellung des für die Aktivierung eines Aufforderungshinweises zum Zulassen einer Anpassung der maximal erlaubten Höchstgeschwindigkeit zugelassenen Bereichs. Im Detail zeigt die Fig. 2 eine Straße St mit einem Geschwindigkeitsbegrenzungsschild als vorausliegendes Ereignis vE, das eine Reduzierung der maximal zulässigen Geschwindigkeit eines sich auf der Straße befindlichen Fahrzeugs EGO erfordert.

Aufgrund einer vorgegebenen Mindestangebotsdauer T (z. B. 3 Sekunden bis zum Erreichen des relevanten Ereignisses vE) und einer vorgegebenen Maximaldistanz D (z. B. 800m vor dem relevanten Ereignis vE) muss eine Aktivierung eine Aufforderungshinweises zum Zulassen einer automatischen Anpassung der maximal zulässigen Höchstgeschwindigkeit innerhalb des durch die Maximaldistanz D und die Mindestangebotsdauer T begrenzten Bereichs Start_AH erfolgen, d. h. aufgrund der vorgegebenen Mindestangebotsdauer T muss die Aktivierung des Aufforderungshinweises spätestens zum Zeitpunkt t2 erfolgen, und aufgrund der vorgegebenen Maximaldistanz D darf der Aufforderungshinweis frühestes zum Zeitpunkt t1 ausgegeben werden. Würde aufgrund der aktuell zugelassen Verzögerungsstrategie als Ausgabe(zeit-)Punkt der ortsabhängige Zeitpunkt AH_VZ1 ermittelt werden, so wird die Ausgabe solange unterbunden, bis der Anfang des zugelassenen Ausgabebereichs Start_AH erreicht ist. Würde aufgrund einer aktuell möglichen bzw. zugelassenen Verzögerungsstrategie als Ausgabe(zeit-)punkt der ortsabhängige Zeitpunkt AH_VZ2 ermittelt werden, müsste die Ausgabe bereits früher, also spätestens zum Ende des zugelassenen Ausgabebereichs Start_AH veranlasst werden.

## Patentansprüche

1. Längsführendes Fahrerassistenzsystem in einem Kraftfahrzeug mit
- einem Erfassungssystem zum Erkennen vorausliegender relevanten Ereignisse, die eine Änderung der maximal zulässigen Höchstgeschwindigkeit erfordern, und
- einer Funktionseinheit, die bei Erkennen eines relevanten Ereignisses unter Berücksichtigung des Orts des relevanten Ereignisses einen ortsabhängigen Zeitpunkt ermittelt, bei dessen Erreichen die Funktionseinheit eine Ausgabe eines Aufforderungshinweises zum Zulassen einer automatischen Anpassung der aktuell maximal zulässigen Höchstgeschwindigkeit auf eine neue maximal zulässige Höchstgeschwindigkeit veranlasst, **dadurch gekennzeichnet, dass**
- die Funktionseinheit (FE) weiter eingerichtet ist, bei der Ermittlung des ortsabhängigen Zeitpunkts eine vorgegebene Mindestangebotsdauer (T) für die Ausgabe des Aufforderungshinweises zu berücksichtigen.

2. Längsführendes Fahrerassistenzsystem nach Anspruch 1, **dadurch gekennzeichnet, dass** die Mindestangebotsdauer (T) einer Mindestangebotsdauer bis zum Erreichen des relevanten Ereignisses (vE) ist.

3. Längsführendes Fahrerassistenzsystem nach einem der vorangegangenen Ansprüche, **dadurch gekennzeichnet, dass** die Funktionseinheit (FE) eingerichtet ist, einen derartigen ortsabhängigen Zeitpunkt zu ermitteln, dass der Aufforderungshinweis mindestens für die vorgegebene Mindestangebotsdauer (T) anzeigbar ist.

4. Längsführendes Fahrerassistenzsystem nach einem der vorangegangenen Ansprüche, **dadurch gekennzeichnet, dass** die Funktionseinheit (FE) eingerichtet ist, auf Basis einer ermittelten Verzögerungsstrategie eine mögliche Angebotsdauer bis zum Erreichen des relevanten Ereignisses (vE) zu ermitteln und diese ermittelte mögliche Angebotsdauer bei der Ermittlung des ortsabhängigen Zeitpunkts zu berücksichtigen.

5. Längsführendes Fahrerassistenzsystem nach Anspruch 4, **dadurch gekennzeichnet, dass** die Verzögerungsstrategie derart ermittelt wird, dass bei Umsetzung der Verzögerungsstrategie am Ort des relevanten Ereignisses (vE) die ermittelte maximal zulässige Höchstgeschwindigkeit erreichbar ist.

6. Längsführendes Fahrerassistenzsystem nach einem der vorangegangenen Ansprüche, **dadurch gekennzeichnet, dass** die Funktionseinheit (FE) eingerichtet ist, bei einer auf Basis einer ermittelten Verzögerungsstrategie ermittelten möglichen Angebotsdauer, die größer als die vorgegebene Mindestangebotsdauer (T) ist, den ortsabhängigen Zeitpunkt auf Basis der ermittelten Verzögerungsstrategie zu ermitteln.

7. Längsführendes Fahrerassistenzsystem nach einem der vorangegangenen Ansprüche, **dadurch gekennzeichnet, dass** die Funktionsauseinheit (FE) eingerichtet ist, bei einer auf Basis einer ermittelten Verzögerungsstrategie ermittelten möglichen Angebotsdauer, die nicht größer als die vorgegebene Mindestangebotsdauer (T) ist, den ortsabhängigen Zeitpunkt aus der vorgegebenen Mindestangebotsdauer (T) zu ermitteln.

8. Längsführendes Fahrerassistenzsystem nach einem der vorangegangenen Ansprüche, **dadurch gekennzeichnet, dass** die Funktionseinheit (FE) eingerichtet ist, bei der Ermittlung des ortsabhängigen Zeitpunkts eine vorgegebene Maximalangebotsdauer oder eine vorgegebene Maximaldistanz (D) bis zum Ort des relevanten Ereignisses (vE) für die Ausgabe des Aufforderungshinweises zu berücksichtigen.

9. Längsführendes Fahrerassistenzsystem nach Anspruch 8, **dadurch gekennzeichnet, dass** die Funktionseinheit (FE) eingerichtet ist, einen derartigen ortsabhängigen Zeitpunkt zu ermitteln, dass der Aufforderungshinweis für eine vorgegebene Maximalangebotsdauer anzeigbar ist, oder frühestens bei Erreichen einer vorgegebenen Maximaldistanz (D) zum Ort des relevanten Ereignisses ausgegeben wird.

## Claims

1. A longitudinal driver assistance system in a motor vehicle, comprising:
- a detection system for recognising upcoming relevant events which require a change in the maximum permitted top speed; and
- a functional unit which, upon recognising a relevant event, determines a location-dependent time taking into consideration the location of the relevant event, and, upon reaching this, prompts the outputting of a request message for permitting an automatic adaptation of the current maximum permitted top speed to a new maximum permitted top speed, **characterised in that**
- the functional unit (FE) is also designed, when determining the location-dependent time, to take into consideration a predetermined minimum offer duration (T) for the outputting of the request message.

2. A longitudinal driver assistance system according to claim 1, **characterised in that** the minimum offer duration (T) is a minimum offer duration until the relevant event (vE) is reached.

3. A longitudinal driver assistance system according to either one of the preceding claims, **characterised in that** the functional unit (FE) is designed to determine a location-dependent time such that the request message can be displayed at least for the predetermined minimum offer duration (T).

4. A longitudinal driver assistance system according to any one of the preceding claims, **characterised in that** the functional unit (FE) is designed, on the basis of a determined delay strategy, to determine a possible offer duration until the relevant event (vE) is reached and to take into consideration this determined possible offer duration when determining the location-dependent time.

5. A longitudinal driver assistance system according to claim 4, **characterised in that** the delay strategy is determined in such a way that, when implementing the delay strategy at the location of the relevant event (vE), the determined maximum permissible top speed can be reached.

6. A longitudinal driver assistance system according to any one of the preceding claims, **characterised in that,** in the case of a possible offer duration determined on the basis of a determined delay strategy and greater than the predetermined minimum offer duration (T), the functional unit (FE) is designed to determine the location-dependent time on the basis of the determined delay strategy.

7. A longitudinal driver assistance system according to any one of the preceding claims, **characterised in that,** in the event of a possible offer duration that is determined on the basis of a determined delay strategy and that is not greater than the predetermined minimum offer duration (T), the functional unit (FE) is designed to determine the location-dependent time from the predetermined minimum offer duration (T).

8. A longitudinal driver assistance system according to any one of the preceding claims, **characterised in that** the functional unit (FE), when determining the location-dependent time, is designed to take into consideration a predetermined maximum offer duration or a predetermined maximum distance (D) to the location of the relevant event (vE) for the outputting of the request message.

9. A longitudinal driver assistance system according to claim 8, **characterised in that** the functional unit (FE) is designed to determine a location-dependent time such that the request message can be displayed for a predetermined maximum offer duration or is output at the earliest when a predetermined maximum distance (D) from the location of the relevant event is reached.

## Revendications

1. Système d'assistance d'un conducteur à guidage longitudinal dans un véhicule comprenant :
- un système de détection permettant d'identifier des événements importants situés à l'avant qui nécessitent une modification de la vitesse de pointe maximum autorisée,
- une unité fonctionnelle qui lors de l'identification d'un événement important détermine, en prenant en considération le lieu de l'événement important, un temps dépendant de ce lieu lors duquel cette unité fonctionnelle délivre en sortie une indication de sollicitation pour permettre d'adapter automatiquement la vitesse de pointe maximum autorisée actuelle à une nouvelle vitesse de pointe maximum autorisée,
**caractérisé en ce que**
- l'unité fonctionnelle (FE) est en outre réalisée pour permettre, lors de la détermination du temps dépendant du lieu de prendre en considération une durée de proposition minimum (T) prédéfinie pour délivrer l'indication de sollicitation.

2. Système d'assistance d'un conducteur à guidage longitudinal conforme à la revendication 1,
**caractérisé en ce que**
la durée de proposition minimum (T) est une durée de proposition minimum jusqu'à avoir atteint l'événement important (vE).

3. Système d'assistance d'un conducteur à guidage longitudinal conforme à l'une des revendications précédentes,
**caractérisé en ce que**
l'unité fonctionnelle (FE) est susceptible de déterminer un temps dépendant du lieu tel que l'indication de sollicitation puisse être affichée au moins pendant la durée de proposition minimum (T) prédéfinie.

4. Système d'assistance d'un conducteur à guidage longitudinal conforme à l'une des revendications précédentes,
**caractérisé en ce que**
l'unité fonctionnelle (FE) est réalisée pour permettre de déterminer sur le fondement d'une stratégie de ralentissement déterminée une durée de proposition possible jusqu'à avoir atteint l'événement important (vE), et de prendre en considération cette durée de proposition possible déterminée lors de la détermination du temps dépendant du lieu.

5. Système d'assistance d'un conducteur à guidage longitudinal conforme à la revendication 4,
**caractérisé en ce que**
la stratégie de ralentissement est déterminée de sorte que, lors d'une modification de cette stratégie de ralentissement la vitesse de pointe maximum autorisée déterminée puisse être atteinte au lieu de l'événement important (vE).

6. Système d'assistance d'un conducteur à guidage longitudinal conforme à l'une des revendications précédentes,
**caractérisé en ce que**
l'unité fonctionnelle (FE) est réalisée pour permettre de détecter le temps dépendant du lieu sur le fondement de la stratégie de ralentissement déterminée lorsque la durée de proposition possible déterminée sur le fondement d'une stratégie de ralentissement déterminée est supérieure à la durée de proposition minimum prédéfinie (T).

7. Système d'assistance d'un conducteur à guidage longitudinal conforme à l'une des revendications précédentes,
**caractérisé en ce que**
l'unité fonctionnelle (FE) est réalisée pour permettre de déterminer le temps dépendant du lieu à partir de la durée de proposition minimum (T) prédéfinie lorsque la durée de proposition possible déterminée sur le fondement d'une stratégie de ralentissement déterminée n'est pas supérieure à la durée de proposition minimum (T) prédéfinie.

8. Système d'assistance d'un conducteur à guidage longitudinal conforme à l'une des revendications précédentes,
**caractérisé en ce que**
l'unité fonctionnelle (FE) est réalisée pour permettre de prendre en considération pour la délivrance en sortie de l'indication de sollicitation lors de la détermination du temps dépendant du lieu une durée de proposition maximum prédéfinie ou une distance maximum (D) prédéfinie jusqu'au lieu de l'événement important (vE).

9. Système d'assistance d'un conducteur à guidage longitudinal conforme à la revendication 8,
**caractérisé en ce que**
l'unité fonctionnelle (FE) est réalisée pour permettre de déterminer un temps dépendant du lieu tel que l'indication de sollicitation soit affichée pendant une durée de proposition maximum prédéfinie, ou, au plus lorsqu'une distance maximum (D) prédéfinie au lieu de l'événement important a été atteinte.
